# FASCICULE DE BREVET EUROPEEN

(11) **EP 1 390 221 B1**
(45) Date de publication et mention de la délivrance du brevet: **03.08.2005**
(21) Numéro de dépôt: 02730348.6
(22) Date de dépôt: 04.04.2002
(51) Int. Cl.: B60J 5/04, B60R 13/08

(54) **PANNEAU D'ETANCHEITE ET D'INSONORISATION, EN PARTICULIER POUR PORTE DE VEHICULE AUTOMOBILE**
DICHTUNGS- UND SCHALLDÄMMUNGSPANEEL INSBESONDERE FÜR PERSONENKRAFTWAGENTÜR
SEALING AND SILENCING PANEL, IN PARTICULAR FOR A MOTOR VEHICLE DOOR

(30) Priorité: 15.05.2001 FR 0106681
(43) Date de publication de la demande: 25.02.2004
(73) Titulaire: Sofitec SA, 78530 Buc (FR)
(72) Inventeur: BOUYONNET, Vincent, F-78690 Les Essarts le Roi (FR)
(74) Mandataire: Cabinet Martinet & Lapoux
(86) Numéro de dépôt international: PCT/FR2002/001186
(87) Numéro de publication internationale: WO 2002/092371

(56) Documents cités:
- US-A- 5 298 694
- US-A- 5 473 125

## Description

La présente invention concerne un panneau d'étanchéité et d'insonorisation, en particulier pour porte de véhicule automobile, ce panneau comprenant une feuille d'étanchéité en matière plastique et une couche d'insonorisation, en général en une matière fibreuse telle par exemple qu'une ouate de fibres fines entremêlées de matière plastique.

Dans la technique habituelle, un panneau de ce type est fixé par collage sur un support tel qu'une tôle de doublure intérieure de porte, au moyen d'un cordon de colle déposé sur la face libre de la feuille d'étanchéité et protégé par un ruban de papier siliconé ou analogue. A l'utilisation de ce panneau, on retire le ruban de papier protecteur, on applique le panneau à l'endroit voulu sur la tôle support et on passe une roulette sur la face libre du panneau, c'est-à-dire sur la couche d'insonorisation, au niveau du cordon de colle pour bien appuyer sur celui-ci et assurer un bon collage du panneau sur la tôle support. Le document US 5298694A décrit un tel panneau d'etanchéité et d'insonorisation.

Ensuite, un panneau de revêtement d'aspect, tel qu'un panneau de finition de porte, est fixé sur le support notamment par clipsage, le panneau d'étanchéité se trouvant entre la tôle support et le panneau de finition.

Cette technique connue présente des inconvénients pour les constructeurs automobiles, car il leur faut approvisionner séparément les panneaux d'étanchéité et d'insonorisation et les panneaux de finition de porte, il faut gérer deux stocks de panneaux et, au montage, fixer d'abord le panneau d'étanchéité et d'insonorisation sur la tôle support, passer la roulette à l'endroit voulu sur le panneau comme indiqué, puis fixer le panneau de finition sur la tôle support par clipsage.

On a proposé de simplifier ce montage et de réduire son coût en disposant tout d'abord le panneau d'étanchéité et d'insonorisation sur le panneau de finition pour obtenir un ensemble monobloc que l'on fixe ensuite en une seule opération sur la tôle support. Comme dans la technique antérieure, un cordon de colle a été préalablement déposé sur la face libre de la feuille d'étanchéité pour le collage du panneau d'étanchéité et d'insonorisation sur la tôle support et c'est l'élasticité de ce panneau, comprimé entre la tôle support et le panneau de finition, qui est censée fournir un appui suffisant du cordon de colle sur la tôle support.

On constate toutefois en pratique des défauts importants de collage, dus à l'élasticité trop faible de la couche d'insonorisation, qui n'a qu'une très faible résistance en compression lorsqu'elle est formée de fibres de très faible diamètre pour avoir une bonne capacité d'insonorisation, et qui conserve une trop faible résistance en compression même lorsqu'elle est formée de fibres de plus gros diamètre pour augmenter son élasticité au détriment de sa capacité d'insonorisation.

La présente invention a notamment pour but d'apporter une solution simple, efficace et peu coûteuse à ce problème.

Elle propose à cet effet un panneau d'étanchéité, d'isolation thermique et/ou d'insonorisation, en particulier pour porte de véhicule automobile, ce panneau comprenant au moins une feuille d'étanchéité en matière plastique ou autre, un cordon de matière adhésive ou d'étanchéité porté par la feuille d'étanchéité sur sa face tournée vers un support tel qu'une tôle de doublure intérieure de porte, et un panneau de revêtement d'aspect, tel qu'un panneau de finition de porte par exemple, recouvrant la feuille d'étanchéité du côté opposé au cordon et au support, caractérisé en ce qu'il comprend un cadre d'appui en matière plastique qui s'étend le long du cordon entre le panneau de revêtement et le cordon.

Ce cadre d'appui, qui s'étend le long du cordon de matière adhésive de l'autre côté de la feuille d'étanchéité, permet d'exercer un bon appui sur le cordon adhésif quand un panneau de revêtement d'aspect, tel qu'un panneau de finition de porte, est fixé sur le support par des moyens appropriés, le cadre d'appui étant interposé entre la feuille d'étanchéité et le panneau de finition et venant prendre appui sur ce panneau de finition.

Dans un mode de réalisation particulier de l'invention, le cadre est en matière plastique expansée, par exemple en polypropylène expansé, et de préférence en billes de polypropylène expansé, ce cadre étant formé par moulage.

Avantageusement, l'expansion des billes de polypropylène et leur collage les unes aux autres sont réalisés dans le moule de fabrication dudit cadre d'appui.

Selon une autre caractéristique de l'invention, la feuille d'étanchéité, le cadre d'appui et le panneau de finition forment un ensemble monobloc qui se monte en une seule opération sur le support précité.

Notamment, le panneau de finition peut être fixé par clipsage ou par vissage sur ce support, en même temps que le panneau d'étanchéité et d'insonorisation est fixé par collage sur le support.

Avantageusement, la feuille d'étanchéité supporte une couche d'insonorisation, par exemple en matière fibreuse telle qu'une ouate de fibres fines.

Selon d'autres variantes de réalisation de l'invention :
- le cadre est solidaire du panneau de revêtement ;
- le cadre est d'une pièce avec le panneau de revêtement ;
- le cadre est formé par la feuille d'étanchéité ;
- la feuille d'étanchéité comporte sur une face un rebord d'appui sur le cordon et sur son autre face au moins un rebord d'appui sur le panneau de revêtement ; et
- la feuille d'étanchéité comporte sur son autre face deux rebords d'appui sur le panneau de revêtement, situés de part et d'autre du rebord d'appui sur le cordon.

Avantageusement, le cordon est en matière adhésive cohésive, résiliente et isotrope et a une section tubulaire, en ω ou à lèvres.

Un tel cordon, associé aux diverses formes de réalisation du cadre d'appui selon l'invention, permet d'absorber toutes les tolérances de fabrication et de montage et assure la continuité de l'étanchéité et du collage.

De façon générale, l'invention simplifie et réduit le nombre d'opérations qui doivent être effectuées sur une chaîne de montage, notamment de portes de véhicule automobile, elle réduit le coût de ce montage, elle réduit également les frais d'approvisionnement et de stockage des constructeurs automobiles et elle améliore la qualité et la continuité de l'étanchéité et du collage d'un panneau sur le support.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe d'un panneau selon l'invention ;
- la figure 2 est une vue schématique partielle en coupe d'une variante de réalisation ; et
- les figures 3 à 5 sont des vues schématiques simplifiées d'autres variantes de réalisation de l'invention.

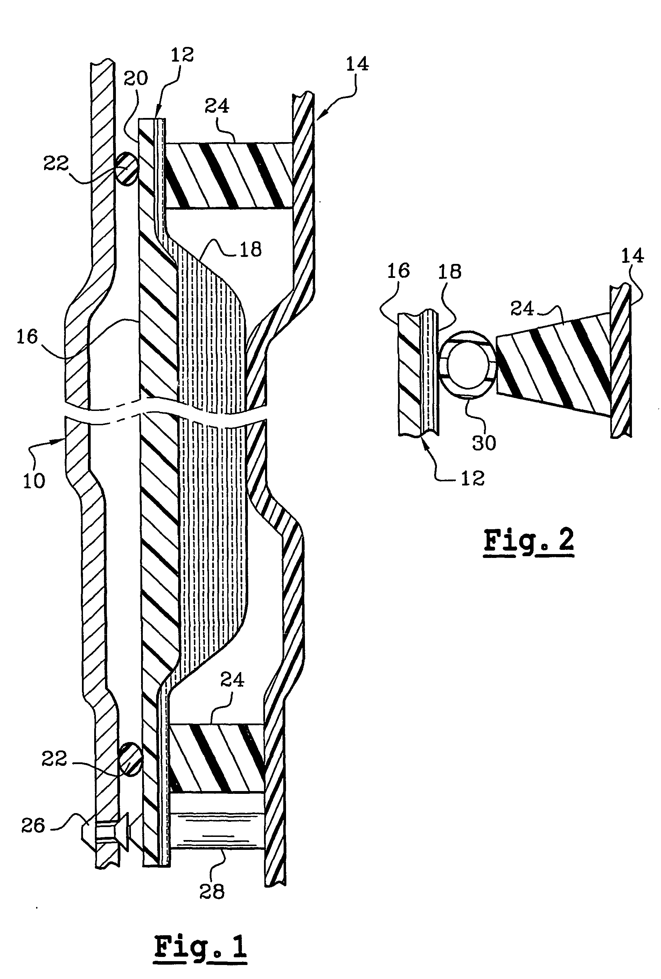

En figure 1, la référence 10 désigne une tôle de support, notamment une tôle de doublure intérieure de porte, sur laquelle on fixe, du côté intérieur du véhicule, un panneau 12 d'étanchéité, d'isolation thermique et d'insonorisation et un panneau 14 de finition de porte, qui est par exemple réalisé en matière plastique et qui peut comporter des accessoires tels qu'un accoudoir, un cendrier, etc.

Le panneau 12 d'étanchéité et d'insonorisation peut être réalisé de nombreuses façons différentes et comprend, dans l'exemple représenté, une feuille 16 d'étanchéité qui est thermoformée et qui comporte, sur sa face tournée vers l'intérieur du véhicule, une couche 18 d'insonorisation et éventuellement d'isolation thermique. La feuille d'étanchéité 16 est par exemple en mousse de polyoléfine, notamment de polyéthylène réticulé ou polypropylène, et peut avoir une épaisseur comprise entre 1 et 3 millimètres environ. La couche 18 d'insonorisation est par exemple en ouate de fibres fines entremêlées, de préférence de fibres de polyester et a une épaisseur comprise entre 8 et 30 millimètres environ, les fibres ayant par exemple un diamètre de l'ordre de 10 µm ou moins.

Comme représenté, la périphérie 20 de ce panneau peut être, au moins sur une partie de sa circonférence, d'épaisseur réduite, cette réduction d'épaisseur étant obtenue par thermoformage de la feuille d'étanchéité 16 pour former une bande de fixation par collage sur le support 10, au moyen d'un cordon 22 de matière adhésive qui est déposé sur la face libre de la feuille 16. La largeur de la partie périphérique 20 est par exemple de 30 à 40 millimètres environ et son épaisseur varie en fonction de l'épaisseur initiale de la feuille d'étanchéité 16.

Pour assurer un bon collage du panneau 12 sur la tôle support 10, un cadre d'appui 24 est agencé entre les panneaux 12 et 14 et s'étend le long du cordon de matière adhésive 22, de l'autre côté du panneau 12 par rapport à ce cordon. Le cadre 24 est en appui sur la face libre de la couche 18 d'insonorisation et sur la face tournée vers l'extérieur du panneau de finition 14, sur toute l'étendue de la périphérie de ce cadre, sa hauteur étant déterminée sensiblement en tout point en fonction de la distance entre les panneaux 12 et 14 au niveau du cordon 22 de matière adhésive. Ainsi, le cadre 24 forme une entretoise sensiblement continue entre les panneaux 12 et 14 le long du cordon 22 de matière adhésive et comprime la couche 18 d'insonorisation.

Dans un mode de réalisation préféré de l'invention, ce cadre 24 est en matière plastique alvéolaire ou expansée, par exemple en billes de polypropylène expansé et présente une certaine élasticité. Il est réalisé par moulage et son procédé de fabrication consiste à introduire des billes de polystyrène non expansé dans un volume de moulage à la forme du cadre 24 à réaliser, puis à chauffer, ce chauffage provoquant l'expansion des billes de polystyrène expansé et leur collage les unes aux autres. Le cadre 24 ainsi réalisé est très léger et suffisamment rigide pour transmettre une force d'appui appropriée à la partie périphérique 20 du panneau 12, au niveau du cordon 22 de matière adhésive. Il est en outre suffisamment déformable élastiquement pour absorber les tolérances dimensionnelles du support 10 et des panneaux 12, 14.

Le panneau 14 est fixé sur la tôle support 10 par clipsage, au moyen de pions "en sapin" 26 qui sont portés par des plots 28 du panneau 14. Avantageusement, ces pions en sapin 26 peuvent servir également à maintenir le panneau 12 sur le panneau 14, avant fixation de l'ensemble sur la tôle support 10. En variante, le panneau 14 est fixé au moyen de vis sur la tôle support 10, ou par tout autre moyen approprié.

Bien entendu, le cadre d'appui 24 est disposé entre les panneaux 12 et 14 aux endroits où sa présence est utile. Dans des réalisations connues, il est en effet prévu de placer dans certaines zones entre les panneaux 12 et 14, des blocs de matière plastique expansée, par exemple de polystyrène expansé, qui occupent l'espace disponible entre les panneaux 12 et 14 et qui ont pour fonction de transmettre vers l'intérieur du véhicule un enfoncement de la porte résultant d'une collision, cette transmission ayant pour effet de pousser vers l'intérieur une personne assise le long de la porte pour maintenir cette personne éloignée de parties de tôle de la porte qui pourraient être coupantes ou dangereuses. Lorsqu'un de ces blocs de matière plastique expansée, qui sont donc des éléments de sécurité intégrés dans les portes, se trouve au niveau du cordon 22 de matière adhésive, l'invention s'en sert comme moyen d'appui du cordon 22 sur le tôle support 10 et le cadre d'appui 24 est interrompu au niveau de ce bloc.

La fixation du panneau d'étanchéité et d'insonorisation selon l'invention sur une tôle 10 de doublure de porte est réalisée de la façon suivante :
on met en place le cadre d'appui 24 sur le panneau 14, puis on amène le panneau 12 et on le fixe provisoirement au panneau 14 au moyen des pions 26 que l'on fait passer à travers des orifices correspondants du panneau 12. Les panneaux 12 et 14 forment ainsi un ensemble livré tel quel à un constructeur automobile. Chez le constructeur, pour la fixation de cet ensemble sur la tôle 10, on retire le papier protecteur posé sur le cordon 22 de matière adhésive, puis on fixe l'ensemble 12, 14 sur la tôle 10 au moyen des pions 26 que l'on introduit à force dans des orifices prévus à cet effet de la tôle 10. La fixation par clipsage du panneau 14 sur la tôle 10 se traduit, grâce à la présence du cadre 24, par un appui du cordon 22 de matière adhésive sur la tôle 10, cet appui étant sensiblement continu le long du cordon 22 et assurant une bonne fixation par collage du panneau 12 sur la tôle 10.

Dans la variante de réalisation de la figure 2, le cadre 24 comprend, du côté du panneau 12, des moyens élastiquement compressibles, tels par exemple qu'un tube 30 en élastomère ou analogue, qui est fixé par soudure le long du cadre 24 et qui appuie sur la couche d'isolation 18 du panneau 12. Ce tube 30 permet de bien absorber les tolérances dimensionnelles et développe une force d'appui de valeur déterminée à peu près constante sur le cordon adhésif 22 par l'intermédiaire du panneau 12. La compression de la couche d'insonorisation 18 contribue également à l'absorption des tolérances dimensionnelles et à l'appui avec une pression relativement constante sur le cordon adhésif 22.

En variante, on peut donner au cadre 24 une configuration en section transversale qui lui confère une certaine élasticité ou compressibilité entre les panneaux 12, 14.

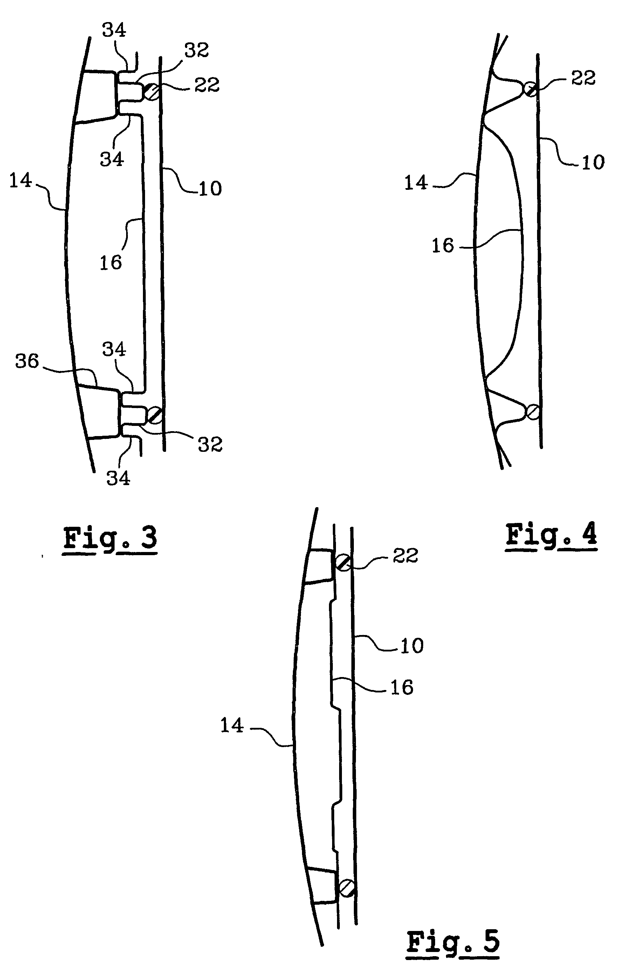

Dans la variante de réalisation de la figure 3, le cadre d'appui du cordon 22 sur la tôle 10 comprend d'une part un rebord 32 de la feuille d'étanchéité, ce rebord ayant une forme de U dont la base est appliquée sur le cordon 22, et deux rebords 34 formés en saillie sur la feuille 16 en direction du panneau de finition 14, ces rebords 34 étant en appui sur un rebord 36 du panneau 14, ce rebord 36 étant formé en saillie en direction de la feuille d'étanchéité 16.

Les rebords 32 et 34 de la feuille 16 sont sensiblement parallèles et continus, tout le long du cordon 22, comme le cadre 24 de la figure 1 et peuvent être complétés par les blocs précités de matière expansée intégrés dans les portes pour la sécurité des passagers. Ces rebords 32 et 34 sont formés lors du thermoformage de la feuille 16. Bien entendu, celle-ci peut comporter une couche 18 d'insonorisation comme décrit plus haut.

Le rebord 36 du panneau 14 peut être formé par thermoformage, par fixation d'un élément rapporté, ou par tout autre moyen approprié.

Le montage et la fixation de l'ensemble 14-16 sur la tôle 10 se font comme déjà décrit.

Dans la variante de la figure 4, la feuille d'étanchéité 16 comporte les rebords 32, 34 précités, et ces rebords 34 sont appliqués directement sur le panneau de finition 14 qui ne comprend pas le ou les rebords 36 précités.

Dans la variante de réalisation de la figure 5, la feuille 16 ne comprend pas les rebords 32, 34 précités et c'est le rebord 36 du panneau 14 qui applique la feuille 16 sur le cordon 22 et comprime ce cordon sur la tôle 10.

Dans tous les cas, le cordon 22 peut être en une matière adhésive, ou en une matière d'étanchéité.

Avantageusement, on utilise une matière adhésive cohésive, résiliente et isotrope, que l'on peut déposer sur la feuille 16 avec une section sensiblement circulaire et qui ne s'aplatit pas ensuite par fluage. Grâce à cette propriété de la matière du cordon 22, on peut donner au cordon, par extrusion, toute forme voulue en section transversale, par exemple en ω, tubulaire, à lèvres, etc... Une telle matière est par exemple commercialisée sous la référence Bondmaster H385 par National Starch & Chemical. La matière du cordon 22 peut aussi être alvéolaire (une mousse).

De façon générale, on peut former le cadre d'appui 24 en toute matière appropriée, notamment en matière plastique alvéolaire ou expansée, par exemple en polypropylène expansé, en polyéthylène expansé ou en polystyrène expansé, de préférence sous forme de billes que l'on place dans un moule et que l'on chauffe.

En variante, ce cadre 24 est réalisable en matière plastique alvéolaire (une mousse) ou en une matière compacte ayant une forme et une structure lui conférant des capacités de déformation en compression et d'élasticité.

La feuille d'étanchéité peut être une feuille revêtue d'une couche de matière adhésive sur tout ou partie de sa surface, avec ou sans papier protecteur. Elle peut être formée d'une mousse de matière plastique, d'un film de matière plastique compacte ou encore une feuille de matériau fibreux transformé ou non (par exemple un feutre phénolique), ou bien d'un complexe des matériaux précités.

La couche d'isolation thermique et d'insonorisation peut être en matériau fibreux (par exemple à base de fibres textiles ou de fibres de matière plastique) ou poreux (par exemple une mousse plastique à cellules ouvertes) ou en un complexe de ces matériaux.

## Revendications

1. Panneau d'étanchéité et d'insonorisation, en particulier pour porte de véhicule automobile, comprenant au moins une feuille d'étanchéité (16) en matière plastique ou autre, un cordon (22) de matière adhésive ou d'étanchéité porté par la feuille (16) d'étanchéité sur sa face tournée vers un support (10) tel qu'une tôle de doublure intérieure de porte, et un panneau (14) de revêtement d'aspect, tel qu'un panneau de finition de porte par exemple, recouvrant la feuille d'étanchéité (16) du côté opposé au cordon (22) et au support (10), **caractérisé en ce qu'**il comprend un cadre d'appui (24) en matière plastique qui s'étend le long du cordon (22) entre le panneau (14) de revêtement et le cordon (22).

2. Panneau selon la revendication 1, **caractérisé en ce que** le cadre (24) est une pièce indépendante et se trouve entre le panneau de revêtement (14) et la feuille d'étanchéité (16).

3. Panneau selon la revendication 1, **caractérisé en ce que** le cadre (24) est solidaire du panneau de revêtement (14).

4. Panneau selon la revendication 1 ou 3, **caractérisé en ce que** le cadre (24) est d'une pièce avec le panneau de revêtement (14).

5. Panneau selon la revendication 1, **caractérisé en ce que** le cadre (24) est formé par la feuille d'étanchéité.

6. Panneau selon la revendication 5, **caractérisé en ce que** la feuille d'étanchéité (16) comporte sur une face un rebord d'appui sur le cordon (22) et sur son autre face au moins un rebord d'appui sur le panneau de revêtement (14).

7. Panneau selon la revendication 6, **caractérisé en ce que** la feuille d'étanchéité (16) comporte sur son autre face deux rebords d'appui sur le panneau de revêtement (14), situés de part et d'autre du rebord d'appui sur le cordon (22).

8. Panneau selon la revendication 2, **caractérisé en ce que** ledit cadre (24) est en matière plastique expansée.

9. Panneau selon la revendication 2 ou 8, **caractérisé en ce que** ledit cadre (24) est en polypropylène expansé, en polyéthylène expansé ou en polystyrène expansé.

10. Panneau selon la revendication 8 ou 9, **caractérisé en ce que** ledit cadre (24) est en billes de matière plastique expansée et est formé par moulage.

11. Panneau selon l'une des revendications précédentes, **caractérisé en ce que** ladite feuille d'étanchéité (16) est thermoformée.

12. Panneau selon l'une des revendications 1 à 11, **caractérisé en ce que** ledit cadre (24) forme une entretoise sensiblement continue entre la feuille (16) d'étanchéité et le panneau (14) de revêtement d'aspect.

13. Panneau selon l'une des revendications 1 à 12, **caractérisé en ce que** la feuille (16) d'étanchéité, le cadre (24) et le panneau (14) de revêtement d'aspect forment un ensemble monobloc qui se monte en une seule opération sur le support (10) précité.

14. Panneau selon la revendication 13, **caractérisé en ce que** le panneau de revêtement (14) est fixé par clipsage ou vissage sur le support (10), en même temps que la feuille (16) d'étanchéité est fixée par collage sur le support (10).

15. Panneau selon la revendication 14, **caractérisé en ce que**, avant collage sur le support (10), la feuille (16) d'étanchéité est fixée de façon provisoire sur le panneau (14) de revêtement d'aspect, par les moyens de clipsage ou vissage de ce panneau (14) sur le support (10).

16. Panneau selon l'une des revendications précédentes, **caractérisé en ce que** le cadre (24) est en appui sur la feuille (16) d'étanchéité par l'intermédiaire de moyens élastiquement compressibles tels qu'un tube (30) d'élastomère ou analogue.

17. Panneau selon l'une des revendications précédentes, **caractérisé en ce que** la feuille d'étanchéité (16) supporte une couche (18) d'insonorisation et/ou d'isolation thermique, par exemple en matière fibreuse.

18. Panneau selon l'une des revendications précédentes, **caractérisé en ce que** le cordon (22) est en matière adhésive cohésive, résiliente et isotrope.

19. Panneau selon la revendication 18, **caractérisé en ce que** le cordon (22) a une section tubulaire, en ω ou à lèvres, et est éventuellement en matière alvéolaire.

## Claims

1. A sealing and acoustic insulation panel, in particular for automobile vehicle door, including at least a sealing sheet (16) of plastics material or similar material, a bead (22) of adhesive material supported by the sealing sheet (16) on its face toward to a support plate (10) such as a door inner skin, and a embellisher panel (14), such as a door trim panel for example, covering the sealing sheet (16) on the opposite side of the bead (22) and the support plate (10), **characterized in that** it comprises a bearing frame (24) made from plastics material which extends along the bead (22) between the embellisher panel (14) and the bead (22).

2. A panel according to claim 1, **characterized in that** the frame (24) is an independent piece and is disposed between the embellisher panel (14) and the sealing sheet (16).

3. A panel according to claim 1, **characterized in that** the frame (24) is fixed to the embellisher panel (14).

4. A panel according to claim 1 or 3, **characterized in that** the frame (24) and the embellisher panel (14) are made in one and only piece.

5. A panel according to claim 1, **characterized in that** the frame (24) is made up by the sealing sheet.

6. A panel according to claim 5, **characterized in that** the sealing sheet (16) includes on one face a rim applying pressure on the bead (22) and on its other face at least a rim applying pressure on the embellisher panel (14).

7. A panel according to claim 6, **characterized in that** the sealing sheet (16) includes on its other face two rims applying pressure on the embellisher panel (14), located on both sides of the rim applying pressure on the bead (22).

8. A panel according to claim 2, **characterized in that** said frame (24) is made from an expanded plastics material.

9. A panel according to claim 2 or 8, **characterized in that** said frame (24) is made from expanded polypropylene, from expanded polyethylene or from expanded polystyrene.

10. A panel according to claim 8 or 9, **characterized in that** said frame (24) is made from expanded plastics material balls and is shaped by molding.

11. A panel according to one of preceding claims, **characterized in that** said sealing sheet (16) is thermoformed.

12. A panel according to one of preceding claims 1 to 11, **characterized in that** said frame (24) forms a substantially continuous spacer between the sealing sheet (16) and the embellisher panel (14).

13. A panel according to one of preceding claims 1 to 12, **characterized in that** the sealing sheet (16), the frame (24) and the embellisher panel (14) form a one-piece assembly which is mounted on said support plate (10) in a single operation.

14. A panel according to claim 13, **characterized in that** the trim panel (14) is clipped or screwed to the support plate (10) at the same time as the sealing sheet (16) is glued to the support plate (10).

15. A panel according to claim 14, **characterized in that**, before gluing it to the support plate (10), the sealing sheet (16) is fixed temporarily to the embellisher panel (14) by the means for clipping or screwing the panel to the support plate (10).

16. A panel according to one of preceding claims, **characterized in that** the frame (24) bears on the sealing sheet (16) through elastically compressible means such as an elastomer or similar material tube (30).

17. A panel according to one of preceding claims, **characterized in that** the sealing sheet (16) supports a layer (18) of acoustic insulation and/or thermal insulation, for example a layer of fibrous material.

18. A panel according to one of preceding claims, **characterized in that** the bead (22) is made from cohesive adhesive, resilient and isotropic material.

19. A panel according to claim 18, **characterized in that** the bead (22) has a tubular, ω-shaped or lips cross-section, and is made from possibly cellular material.

## Patentansprüche

1. Dichtungs- und Schalldämpfplatte, insbesondere für Kraftfahrzeugtür, mindestens eine Dichtungsplatte (16) aus Kunststoff oder anderem umfassend, ein Band (22) aus Klebstoff oder Dichtungsmaterial, das von der Dichtungsplatte (16) auf der Seite getragen wird, die einem Träger (10), wie etwa einem Türinnenausfütterungsblech, zugewandt ist, und eine Verkleidungsplatte (14), wie etwa beispielsweise eine Türabschlussplatte, die die Dichtungsplatte (16) auf der dem Band (22) und dem Träger (10) abgewandten Seite bedeckt, **dadurch gekennzeichnet, dass** sie einen Andrückrahmen (24) aus Kunststoff aufweist, der längs dem Band (22) zwischen der Verkleidungsplatte (14) und dem Band (22) verläuft.

2. Platte nach Patentanspruch 1 , **dadurch gekennzeichnet, dass** der Rahmen (24) ein separates Teil ist und sich zwischen der Verkleidungsplatte (14) und der Dichtungsplatte (16) befindet.

3. Platte nach Patentanspruch 1, **dadurch gekennzeichnet, dass** der Rahmen (24) mit der Verkleidungsplatte (14) fest verbunden ist.

4. Platte nach Patentanspruch 1 oder 3, **dadurch gekennzeichnet, dass** der Rahmen (24) mit der Verkleidungsplatte (14) ein Stück bildet.

5. Platte nach Patentanspruch 1, **dadurch gekennzeichnet, dass** der Rahmen (24) aus der Dichtungsplatte gebildet wird.

6. Platte nach Patentanspruch 5, **dadurch gekennzeichnet, dass** die Dichtungsplatte (16) auf einer Seite eine Kante zum Andrücken des Bandes (22) aufweist und auf ihrer anderen Seite mindestens eine Kante zum Andrücken an die Verkleidungsplatte (14).

7. Platte nach Patentanspruch 6, **dadurch gekennzeichnet, dass** die Dichtungsplatte (16) auf ihrer anderen Seite zwei Kanten zum Andrücken an die Verkleidungsplatte (14) aufweist, die sich beiderseits der Kante zum Andrücken des Bandes (22) befinden.

8. Platte nach Patentanspruch 2, **dadurch gekennzeichnet, dass** der genannte Rahmen (24) aus Schaumkunststoff besteht.

9. Platte nach Patentanspruch 2 oder 8, **dadurch gekennzeichnet, dass** der genannte Rahmen (24) aus expandiertem Polypropylen, aus expandiertem Polyethylen, oder aus expandiertem Polystyren besteht.

10. Platte nach Patentanspruch 8 oder 9, **dadurch gekennzeichnet, dass** der genannte Rahmen (24) aus Schaumkunststoffkugeln besteht und durch Formen ausgebildet wird.

11. Platte nach einem der vorangehenden Patentansprüche, **dadurch gekennzeichnet, dass** die genannte Dichtungsplatte (16) warmgeformt ist.

12. Platte nach einem der Patentansprüche 1 bis 11, **dadurch gekennzeichnet, dass** der genannte Rahmen (24) einen im Wesentlichen ununterbrochenen Steg zwischen der Dichtungsplatte (16) und der Verkleidungsplatte (14) bildet.

13. Platte nach einem der Patentansprüche 1 bis 12, **dadurch gekennzeichnet, dass** die Dichtungsplatte (16), der Rahmen (24) und die Verkleidungsplatte (14) eine einstückige Gesamtheit bilden, die in einem einzigen Arbeitsgang auf dem genannten Träger (10) montiert wird.

14. Platte nach Patentanspruch 13, **dadurch gekennzeichnet, dass** die Verkleidungsplatte (14) durch Einrasten oder Schrauben am Träger (10) befestigt wird, gleichzeitig mit der Befestigung der Dichtungsplatte (16) am Träger (10) durch Klebung.

15. Platte nach Patentanspruch 14, **dadurch gekennzeichnet, dass** die Dichtungsplatte (16) vor Klebung auf den Träger (10) provisorisch durch die Mittel zum Einrasten oder Festschrauben der Verkleidungsplatte (14) am Träger (10) an dieser Platte (14) befestigt wird.

16. Platte nach einem der vorangehenden Patentansprüche, **dadurch gekennzeichnet, dass** der Rahmen (24) über elastisch komprimierbare Mittel, wie etwa einen Schlauch (30) aus Elastomer oder Ähnlichem, auf die Dichtungsplatte (16) drückt.

17. Platte nach einem der vorangehenden Patentansprüche, **dadurch gekennzeichnet, dass** die Dichtungsplatte (16) eine Schicht (18) zur Schalldämpfung und/oder Wärmeisolation, beispielsweise aus Faserwerkstoff, trägt.

18. Platte nach einem der vorangehenden Patentansprüche, **dadurch gekennzeichnet, dass** das Band (22) aus kohäsivem, elastischem und isotropem Klebstoff besteht.

19. Platte nach Patentanspruch 18, **dadurch gekennzeichnet, dass** das Band (22) einen schlauchförmigen Querschnitt hat, einen ω-förmigen oder mit Lippen versehenen, und gegebenenfalls aus zelligem Werkstoff besteht.
